# EUROPEAN PATENT SPECIFICATION

(11) **EP 0 950 919 B1**
(45) Date of publication and mention of the grant of the patent: **02.08.2006**
(21) Application number: 99106500.4
(22) Date of filing: 30.03.1999
(51) Int. Cl.: G03B 27/62, G11B 15/20, G11B 15/02, G11B 15/087

(54) **Apparatus and method for reading magnetically recorded data from a photographic film on winding thereof**
Vorrichtung und Verfahren zum Lesen magnetisch gespeicherter Daten von einem photographischen Film beim Spulen
Dispositif et procédé pour lire des données enregistrées magnétiquement sur un film photographique lors de son déroulement

(30) Priority: 17.04.1998 JP 12422598
(43) Date of publication of application: 20.10.1999
(73) Proprietor: NORITSU KOKI CO., LTD., Wakayama-shi, Wakayama (JP)
(72) Inventor: Hidd, Keiji, c/o Noritsu Koki Co., Ltd., Wakayama-shi, Wakayama (JP); Naka, Yukimasa, c/o Noritsu Koki Co., Ltd., Wakayama-shi, Wakayama (JP); Koyama, Yoshihiro, c/o Noritsu Koki Co., Ltd., Wakayama-shi, Wakayama (JP)
(74) Representative: Müller-Boré & Partner Patentanwälte

(56) References cited:
- US-A- 5 130 728
- US-A- 5 220 367
- US-A- 5 251 077
- US-A- 5 612 757

## Description

The present invention relates to apparatus and method for feeding a film and, particularly to film feeding apparatus and method for winding or rewinding a film, e.g. compatible with the APS (advanced photo system) in a cartridge in order to read magnetic data recorded on the film.

Magnetic data are written on an APS film by a photo processing apparatus or camera, and the written magnetic data are read by a magnetic head only during the scanning of a film image information.

At this time, the magnetic data may fail to be read by being influenced by an amount of magnetic data to be recorded by a camera used for photographing, treatment liquids used to develop a film, the state of a magnetic reading device when the magnetic data are read, and other factors. Upon such an occurrence, an operator is notified of an error in reading the magnetic data via a monitor. If the operator gives a command to reread the image data in response to the notification, scanning is performed again to reread the magnetic data.

Since only one chance to read the magnetic data is given only during the scanning in the prior art, there is a high probability of failing to read the magnetic data. If the magnetic data fail to be read, scanning needs to be performed again. Thus, the prior art needs a longer time to properly read the magnetic data and has a poor operability.

In the case that the magnetic data are reread, they are read on the same condition (at the same speed) at every scanning. Accordingly, if the film has a poor recorded state and/or the recording density of the magnetic data is very high or very low, the magnetic data may not be read even despite repeated attempts to reread or an error may be detected. This leads not only to a poor operability, but also to a reduction in the reliability of the apparatus.

As an example, US-A-5,220,367 relates to a camera using a film with a magnetic storage portion, including reading means for reading out information from the magnetic storage portion of the film, judgement means for judging whether or not the information is properly read out by the reading means, and control means for feeding the film to a position where the reading operation is not properly performed and causing the reading means to perform the reading operation again.

In view of the above, It is an object of the present invention to provide a film feeding apparatus and a film feeding method, wherein the operability and reliability are improved.

This object is fulfilled by a film feeding apparatus having the features disclosed in claim 1 and by a film feeding method having the features disclosed in claim 7. Preferred embodiments are subject of the dependent subclaims.

In order to accomplish the above object, the invention is directed to a film feeding apparatus for feeding a film so that magnetic data recorded on the film can be read, comprising:
a storage means for storing an information on the magnetic data for each frame,
a first reading means for reading the magnetic data of each frame while the film is being fed and storing the read magnetic data in the storage means,
a first judging means for judging, based on the information stored in the storage means, whether or not there is a frame whose magnetic data was not read, and
a second reading means for changing a reading condition if there is a frame whose magnetic data has not been read yet, reading the magnetic data again and storing the read magnetic data in the storage means.

In the film feeding apparatus thus constructed, the magnetic data are read again after changing the reading condition if it was judged, based on the information on the magnetic data of the respective frames which were read while the film was being wound, that there was a frame whose magnetic data had not been read yet or was not properly read. By changing the reading condition, there is a higher possibility of reading the magnetic data which was not read while the film was wound and, as a result, a reading rate of the magnetic data can be improved.

The second reading means comprises means for reading the magnetic data while the film is being rewound.

With this construction, the magnetic data are read again while the film is rewound to its leading end in the case that the magnetic data failed to be read by the magnetic data reading during the winding of the film. Thus, the reading condition is made different from the one when the film is wound (the film feeding direction is reversed) and a chance to read the magnetic data is increased. Therefore, the reading rate of the magnetic data can be improved.

Preferably, the first reading means reads the magnetic data by intermittently feeding the film frame by frame, and the second reading means reads the magnetic data by continuously feeding the film.

With this construction, the magnetic data are read by intermittently feeding the film frame by frame while the film is wound, while being read by continuously feeding the film to its leading end while the film is rewound. Thus, the reading condition of the magnetic data when the film is rewound can be made further different from the one when the film is wound.

Preferably, there is provided a rereading means for changing the reading condition again if there is a frame whose magnetic data has not been read yet even after the rewinding of the film, rereading the magnetic data, and storing the read magnetic data in the storage means.

With this construction, in the case that there is still a frame whose magnetic data has not been read yet even after the film was rewound, the magnetic data are reread, if necessary, after changing the reading condition again. Thus, a possibility of reading the magnetic data which could not be read before increases, thereby improving the reading rate of the magnetic data.

Preferably, the rereading means comprises means for notifying an operator that there is a frame whose magnetic data has not been read yet even after the rewinding of the film, and means for changing a feeding speed of the film upon receipt of a command from the operator to reread the magnetic data again and rereading the magnetic data.

With this construction, in the case that there is still a frame whose magnetic data has not been read yet even after the film was rewound, the feeding speed of the film is changed upon receipt of a corresponding command from the operator and the magnetic data are reread again. By rereading the magnetic data again after changing the feeding speed of the film in response to the command from the operator, the magnetic data can be so read as to conform to its recording density, if necessary, and the reading rate of the magnetic data can be further improved.

Preferably, the storage means stores flags indicative of the magnetic data of each frame and the presence or absence of the magnetic data for each frame, and the first judging means comprises a second judging means for judging, based on the flags stored in the storage means, whether or not there is any frame whose magnetic data has not been read yet.

With this construction, whether or not there is any frame whose magnetic data has not been read yet is judged based on the flags stored in the magnetic means. For example, the second judging means refers to the flags and judges that a reading error occurred in reading the magnetic data for the frame, for which no magnetic data has been read, if the presence/absence of the magnetic data between adjacent or successive frames has changed twice or more. Thus, the judgment as to whether or not there is any frame whose magnetic data has not been read yet can be made in consideration of the case where no magnetic data is recorded on the film, the case where the film is exposed from its intermediate frame, and the case where the film is exposed to its intermediate frame.

Further, in the case that there is still a frame whose magnetic data has not been read yet only by the magnetic data reading during the winding of the film, the second reading means may change the feeding speed of the film after the film is rewound and may reread the magnetic data. By changing the feeding speed of the film, the reading condition during the second film winding can be made different from the one during the first film winding. Thus, a possibility of reading the magnetic data which could not be read during the first film winding, increases and the reading rate of the magnetic data can be improved.

The present invention is also directed to a feeding method for feeding a film so that magnetic data recorded on the film can be read, comprising:
a first step of reading magnetic data frame by frame while the film is being fed and storing an information on the magnetic data for each frame in a storage means,
a second step of judging, based on the information stored in the storage means, whether or not there is any frame whose magnetic data has not been read yet,
a third step of reading the magnetic data during the rewinding of the film if there is some frame whose magnetic data has not been read yet and storing the information on the magnetic data in the storage means,
a fourth step of, after the film is rewound, judging based on the information stored in the storage means whether or not there is any frame whose magnetic data has not been read yet,
a fifth step of notifying an operator that there is some frame whose magnetic data has not been read yet, and
a sixth step of, upon receipt of a command from an operator to reread the magnetic data again, changing a feeding speed of the film and rereading the magnetic data again.

According to this method, the magnetic data are read frame by frame during the winding of the film. If there is any frame whose magnetic data has not been read yet, the magnetic data are read again during the rewinding of the film. If there is still a frame whose magnetic data has not been read yet even after the film was rewound, it is notified to the operator. If the operator gives a command to reread the magnetic data again, the magnetic data are reread again after the feeding speed of the film is changed. Since the magnetic data are also read during the rewinding of the film and are, if necessary, reread after changing the feeding speed of the film, the reading rate of the magnetic data can be improved.

These and other objects, features and advantages of the present invention will become more apparent upon a reading of the following detailed description and accompanying drawings in which:
FIGS. 1(a) and 1(b) are schematic plan and front views of one embodiment of the invention, respectively,
FIG. 2 is a block diagram of the embodiment of the invention,
FIGS. 3(a) to 3(b) are diagrams showing recording positions of magnetic data and bar codes on a film, wherein FIG. 3(a) shows the recording positions of the magnetic data, FIG. 3(b) shows the recording positions of the bar codes, and FIG. 3(c) enlargedly shows one bar code,
FIG. 4 is a block diagram showing an exemplary magnetic reading apparatus,
FIG. 5 is a table showing operations made in a pulse inverter.
FIGS. 6(a) and 6(b) are block diagrams showing an exemplary shift register, wherein FIG. 6(a) shows a connection state when a film feeding motor is rotated in a forward direction and FIG. 6(b) shows a connection state when this motor is rotated in a reverse direction,
FIG. 7 is a waveform chart showing signals of the respective elements of a magnetic reading device during the winding of the film,
FIG. 8 is a waveform chart showing signals of the respective elements of the magnetic reading device during the rewinding of the film,
FIG. 9 is a flow chart showing an exemplary main operation of the embodiment of the invention,
FIG. 10 is a flow chart showing an exemplary operation performed in Step S3 of FIG. 9,
FIGS. 11 and 12 are a flow chart showing an exemplary operation performed in Steps S7 and S15 of FIG. 9, and
FIGS. 13(a) to 13(f) are charts showing criteria for judging whether or not the magnetic data have been read.

Hereafter, one embodiment of the invention is described with reference to the accompanying drawings.

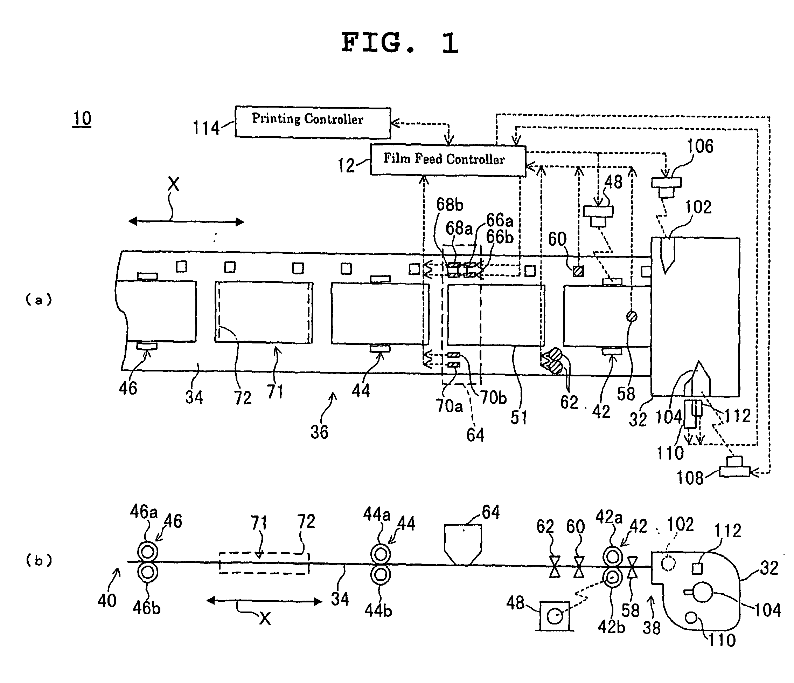

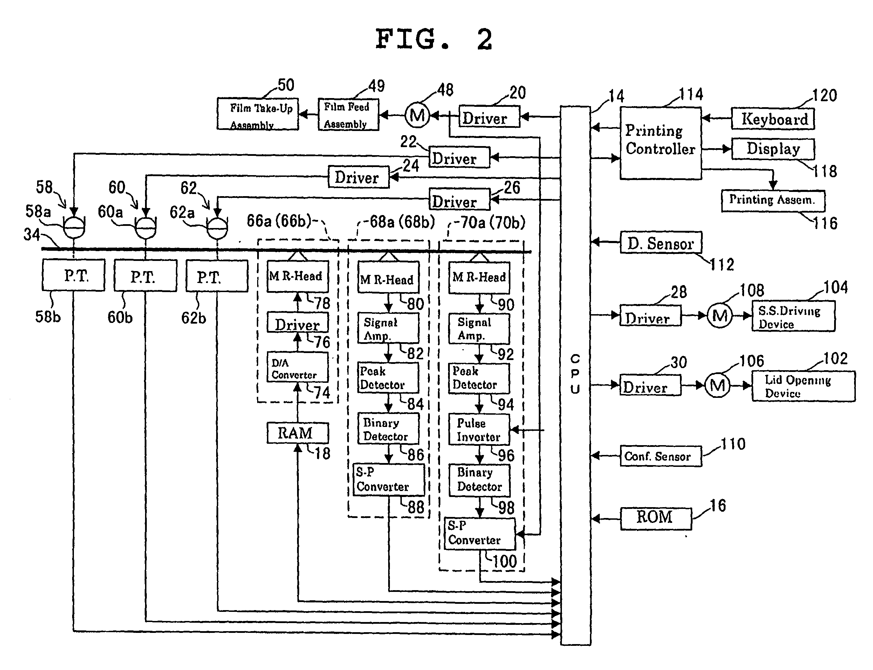

With reference to FIGS. 1 and 2, a film feeding apparatus 10 according to this embodiment is used in a photo processing apparatus for scanning and printing an image information of a film such as an APS film.

The film feeding apparatus 10 includes a film feed controller 12 for controlling the operation of the film feeding apparatus 10. The film feed controller 12 corresponds to an assembly of a CPU 14, a ROM 16, a RAM 18 and drivers 20 to 30.

Programs for various controls of the CPU 14 are stored in the ROM 16, whereas data necessary for the controls by the CPU 14 are temporarily stored in the RAM 18. Specifically, the data to be stored in the RAM 18 include a flag (0 in the presence of the magnetic data, 1 in the absence thereof) representing the presence or absence of a magnetic data 55 (described later) for each frame 51 (described later), and the magnetic data 54 and 55. The magnetic data 54, 55 each consist of, e.g. several bytes (one byte is a 8-bit data consisting of a 1-bit parity and a 7-bit data).

A data on the rotating speed of the film feeding motor 48 (described later) is also stored in the RAM 18. It may be, however, stored in the ROM 16 if being set in advance.

The film feeding apparatus 10 also includes a feed path 36, which serves as a path for feeding a film 34 contained in a cartridge 32 in directions of arrow X. Pairs of feed rollers 42, 44, 46 are arranged substantially at regular intervals along the feed path 36 from a loading side 38 toward an unloading side 40 in such a manner as to hold the film 34 therebetween. The pairs of feed rollers 42, 44, 46 are comprised of drive rollers 42a, 44a and 46a arranged at the upper side of the film 34 and pressing rollers 42b, 44b and 46b arranged at the lower side of the film 34, respectively.

If a control signal from the CPU 14 of the film feed controller 12 is sent to the film feeding motor 48 made of a pulse motor or stepping motor via the driver 20, the film feeding motor 48 synchronously drives the feed rollers 42, 44, 46 via a film feed assembly 49, i.e. a transmission means (not shown) to rotate them. The film feeding motor 48 is controlled by the CPU 14 such that the film 34 is intermittently fed frame by frame when the film 34 is dispensed from the cartridge 32 and is continuously fed at a constant speed when the film 34 is rewound into the cartridge 32.

Here, a first film winding speed, a second and subsequent film winding speed which is slower than the first film winding speed, and a film rewinding speed are set as rotating speeds of the film feeding motor 48. The reason why the second and subsequent film winding speed is slower than the first one is that the reading frequently ends in failure due to a high recording density of the magnetic data 55. However, the second and subsequent film winding speed may be set faster. The rotating speed of the film feeding motor 48 may be selected from several speeds set in advance or may be desirably set by an operator.

The film feed assembly 49 drives a film take-up assembly 50 for taking up the film 34.

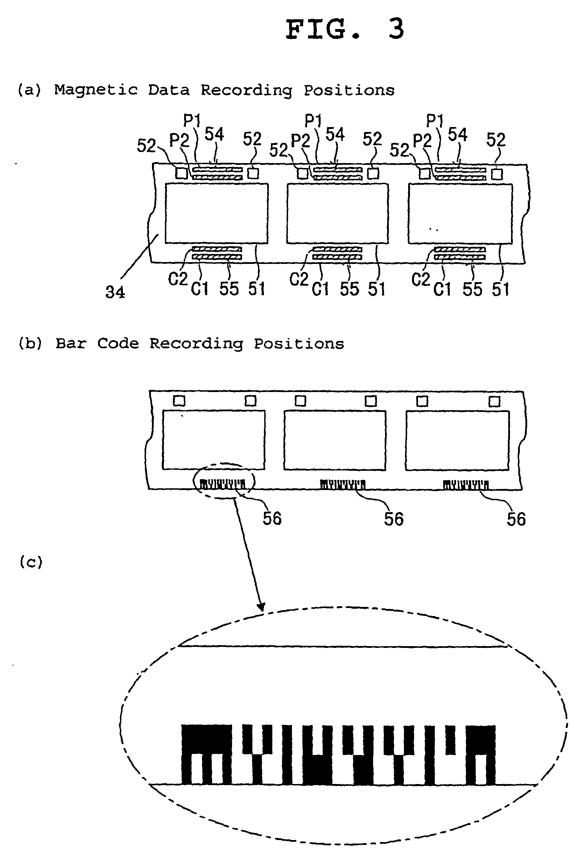

Here, as shown in FIG. 3, two perforations 52 are so formed as to correspond to each frame 51 at one end of the film 34 with respect to the widthwise direction thereof. Between the corresponding pair of perforations 52 are tracks P1, P2 on which the magnetic data 54 is recordable by the film feeding apparatus 10. At the other end of the film 34 with respect to the widthwise direction thereof, there are tracks C1, C2 on which the magnetic data 55 is recordable by a camera (not shown) and, as shown in FIGS. 3(b) and FIG. 3(c), bar codes (DX codes) 56.

The magnetic data 54 includes pieces of information such as print colors and a density correction value; the magnetic data 55 includes pieces of information such as photographing information used in the camera (shutter speed, aperture value, date of photographing, place of photographing, etc.); and the bar code 56 include pieces of information such as an ID number and frame numbers optically imprinted at the manufacturing stage of the film 34. Since the relative positions of the frames 51 with respect to the corresponding perforations 52 is constantly equal, the position of the frame 51 can be confirmed by detecting the perforations 52.

Referring back to FIGS. 1 and 2, a film end sensor 58 for detecting the leading end of the film 34 is provided between the cartridge 32 and the pair of feed rollers 42. Between the pairs of feed rollers 42 and 44, there are provided a perforation sensor 60 for detecting the perforations 52 at the one end of the film 34 with respect to its widthwise direction, and bar code sensors 62 for detecting the bar codes 56 at the other end of the film 34 with respect to its widthwise direction. The bar code sensors 62 also detect an end perforation (not shown) to discriminate whether or not the film 34 has been wound up to the last frame 51. The film end sensor 58, the perforation sensor 60 and the bar code sensors 62 are comprised of a pair of an LED 58a and a phototransistor 58b, a pair of an LED 60a and a phototransistor 60b and a pair of LED 62a and a phototransistor 62b, respectively.

The LEDs 58a, 60a, 62a are driven by drivers 22, 24, 26, respectively, and the detection signals of the phototransistors 58b, 60b, 62b are given to the CPU 14.

In vicinity of the pair of feed rollers 44, a magnetic data reading/writing unit 64 is so provided as to extend in a direction normal to the feed path 36. The unit 64 is comprised of a magnetic writing device 66a for the track P1, a magnetic writing device 66b for the track P2, a magnetic reading device 68a for the track P1, a magnetic reading device 68b for the track P2, a magnetic reading device 70a for the track C1 and a magnetic reading device 70b for the track C2. A film pressing unit 72 is provided in an exposure position between the pairs of feed rollers 44 and 46.

The magnetic writing device 66a writes the colors, the density correction value and other information on the film 34, for example, while the film 34 is taken up after printing. In the magnetic writing device 66a, the data stored in the RAM 18 are converted into an analog signal by a digital-to-analog (D/A) converter 74, and the magnetic data 54 is written on the film 34 by a magnetic write head 78 in accordance with a voltage applied by a driver 76 based on the obtained signal. Since the magnetic writing device 66b is constructed and operated substantially in the same manner as the magnetic writing device 66a, it is neither illustrated nor repetitively described.

The magnetic reading device 68a reads the magnetic data 54, for example, during scanning. In the magnetic reading device 68a, the magnetic data 54 written by the film feeding apparatus 10 or the like is read by a magnetic read head 80 and is analog-to-digital (A/D) converted after being amplified by a signal amplifier 82. Specifically, the magnetic data 54 is converted into a data pulse having a rectangular waveform by a peak detector 84, and digitized by a binary detector 84. After being converted into a parallel data by a serial-parallel converter 88, the digitized magnetic data 54 is fed to the CPU 14 and stored in the RAM 18. Since the magnetic reading device 68b is constructed and operated substantially in the same manner as the magnetic reading device 68a, it is neither illustrated nor repetitively described.

The magnetic reading device 70a reads the magnetic data 55, for example, during the scanning, and its read result is used for a judgment as to whether or not the magnetic data 54 and 55 should be read again. By using the magnetic data 55 written by the camera in order to judge whether or not the magnetic data 54 and 55 should be read again, whether or not the magnetic data essential for the treatment of the film 34 have been read can be judged.

Though described in detail later, the driver 20 sends a signal representing the rotating direction of the film feeding motor 48, i.e. whether the film 34 is to be wound or rewound, to the magnetic reading device 70a, which in turn reads the magnetic data 55 in accordance with the received signal. In the magnetic reading device 70a, the magnetic data 55 written by the camera is read by a magnetic read head 90 and is A/D converted after being amplified by a signal amplifier 92. Specifically, the magnetic data 55 is converted into a data pulse having a rectangular waveform, digitized by a binary detector 98 after passing through a pulse inverter 96 which operates in response to the output of the driver 20, and sent to a serial-parallel converter 100 which operates in response to the output of the driver 20. After being converted into a parallel data by the serial-parallel converter 100, the digitized magnetic data 55 is sent to the CPU 14 and stored in the RAM 18. Based on the information represented by the magnetic data 55 stored in the RAM 18, the CPU 14 judges whether or not the magnetic data 54 and 55 should be read again. Since the magnetic reading device 70b is constructed and operated substantially in the same manner as the magnetic reading device 70a, it is neither illustrated nor repetitively described.

The cartridge 32 is formed with a lid opening portion 102 for opening and closing an unillustrated cartridge shading lid (light-lock door) and a cartridge spool shaft driving device 104 for rotating an unillustrated cartridge spool. The lid opening portion 102 and the driving device 104 are respectively driven by a lid opening motor 106 and a spool shaft drive motor 108, which are both pulse motors or stepping motors, in order to open the cartridge shading lid and wind the film 34.

On one side surface of the cartridge 32, a confirmation sensor 110 comprised of, e.g. a limit switch for confirming whether the film 34 is developed or undeveloped is arranged in a position corresponding to a developed film mark (not shown). Whether the film 34 is developed or undeveloped is detected based on whether or not the limit switch has been pushed by the developed film mark. In vicinity of the one side surface of the cartridge 32 is provided a detection sensor 112 made of, e.g. a limit switch for detecting whether or not the cartridge 32 is mounted in the film feeding apparatus 10. The detection signals of the confirmation sensor 110 and the detection sensor 112 are sent to the CPU 14.

A printing controller 114 controls a printing assembly 116 and a display 118 in accordance with control signals from the CPU 14. The printing assembly 116 prints an image information of the frame 51 located in the exposure position on a printing paper (not shown). On the display 118 are displayed the operation results of the CPU 14 and the like. Whether or not the magnetic data 54 and 55 are to be read again is judged in accordance with an input given by an operator by means of a keyboard 120. Further, the rotating speed of the film feeding motor 48 can be set by the keyboard 120.

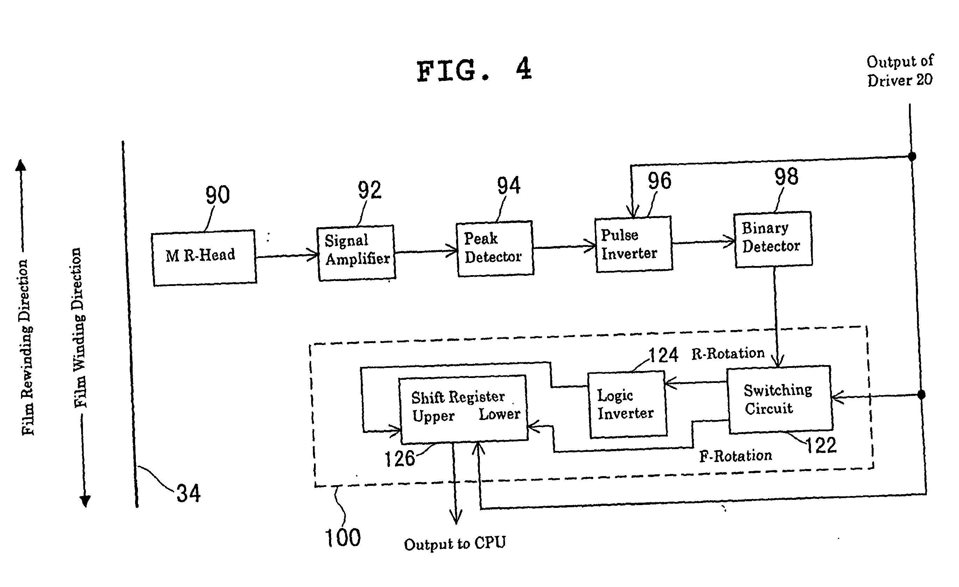

Here, the magnetic reading device 70a is described with reference to FIGS. 4 to 6.

As described above, in the magnetic reading device 70a, the magnetic data 55 is read by the magnetic read head 90, converted into the data pulse having a rectangular waveform by the peak detector 94 after being amplified by the signal amplifier 92, and sent to the pulse inverter 96.

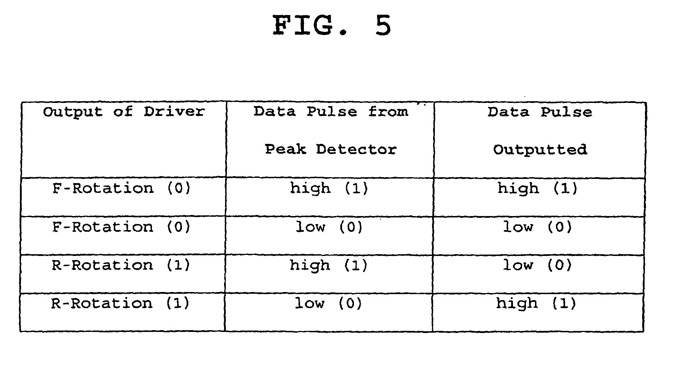

The pulse inverter 96 is comprised of, e.g. an exclusive or (XOR) circuit, and performs an "exclusive or" operation for the output of the driver 20 representing the rotating direction of the film feeding motor 48 and the data pulse from the peak detector 94 as shown in FIG. 5, and outputs the obtained data pulse to the binary detector 98.

The binary detector 98 performs a binary operation (1 or 0) based on to which trailing edge of the film leading end side or of the film rear end side the leading edge (point where low level changes to high level) of the data pulse is closer. A binary data "0" is given to a switching circuit 122 of the serial-parallel converter 100 if this leading edge is closer to the film leading end side, whereas a binary data "1" is given thereto if this leading edge is closer to the film rear end side.

The switching circuit 122 is controlled in accordance with the output of the driver 20 representing the rotating direction of the film feeding motor 48, and sends the binary data to a logic inverter 124 when the film feeding motor 48 is rotated in the reverse direction while sending it directly to a shift register 126 when the film feeding motor 48 is rotated in the forward direction. The logic inverter 124 is comprised of, e.g. an inverter to give the binary data to the shift register 126 after inverting it.

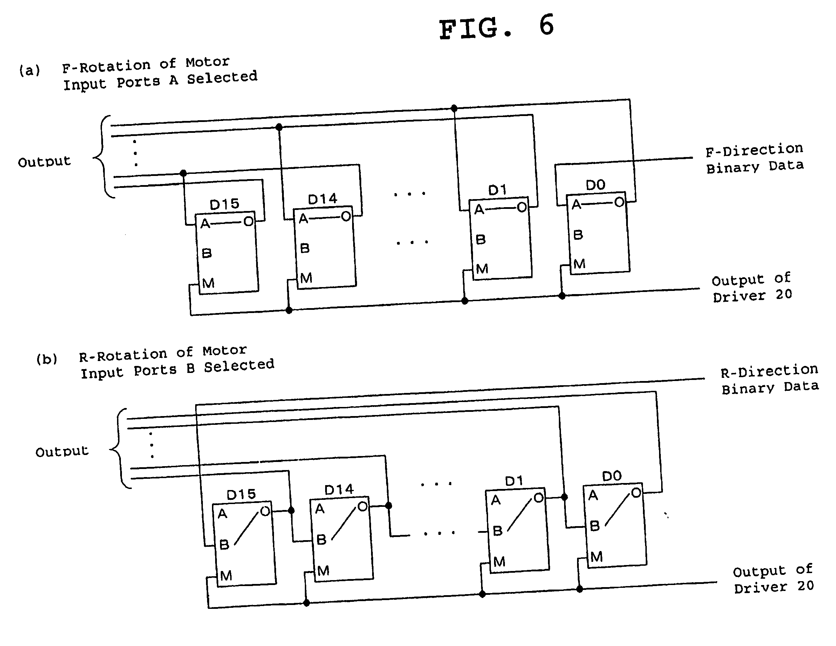

The shift register 126 includes shifting circuits DO to D15 as shown in FIG. 6 and outputs a 16-bit parallel data after performing a serial-to-parallel conversion or transformation. The shifting circuits D0 to D15 are each comprised of, for example, a switching circuit and a flip-flop, and the input ports thereof are switched in accordance with the output of the driver 20 representing the rotating direction of the film feeding motor 48. The input position of the binary data (whether the binary data is to be stored from the highest numbered shifting circuit or from the lowest numbered shifting circuit) and a shifting direction are also switched by switching the connection of the shifting circuits as shown in FIGS. 6(a) and 6(b). In FIGS. 6(a) and 6(b), A, B, M, O denote input ports during the forward rotation of the motor 48, input ports during the reverse rotation of the motor 48, the output of the driver 20 representing the rotating direction of the film feeding motor 48 and output ports, respectively.

When the binary data from the binary detector 98 becomes 16 bits, the serial-parallel converter 100 sends a corresponding signal to the CPU 14 to notify it. The magnetic data includes a start sentinel (SS) and an end sentinel (ES) representing the start and end of each data. Since these bit patterns are determined, the serial-parallel converter 100 checks the bit pattern upon the output of each bit of the binary data. When the leading end of the magnetic data 55 of each frame 51 is detected, it is notified to the CPU 14. Even in the check of the bit pattern, the sentinel to be detected is switched according to the output of the driver 20 representing the rotating direction of the film feeding motor 48. The start sentinel SS is detected during the winding of the film (forward rotation), whereas the end sentinel ES is detected during the rewinding of the film (reverse rotation).

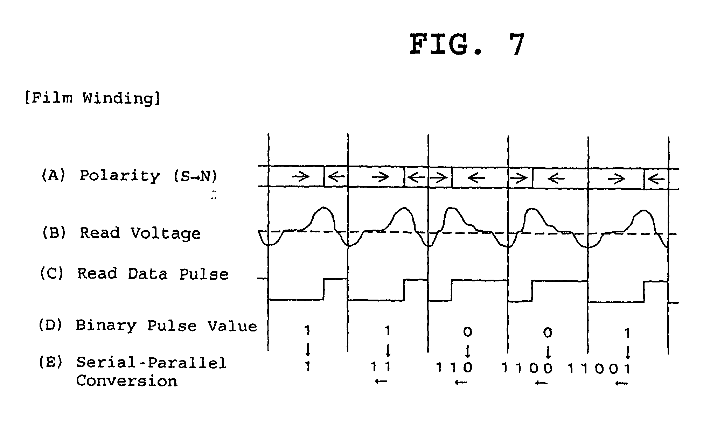

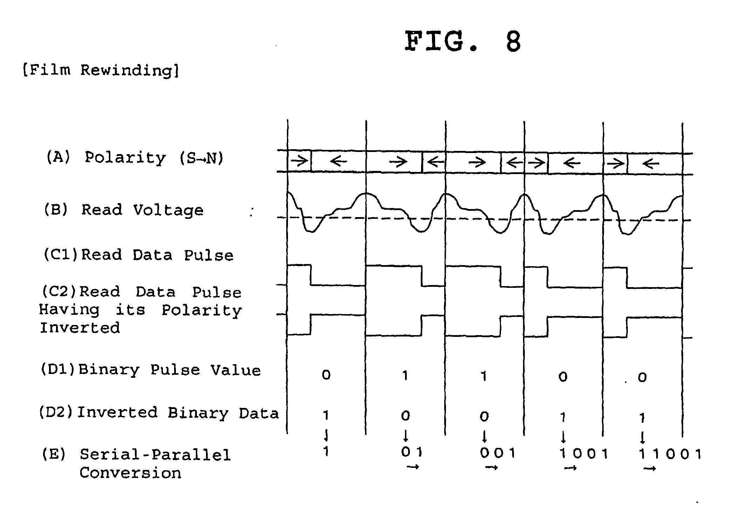

Next, the magnetic data reading by the magnetic reading device 70a is described with reference to FIGS. 7 and 8.

First, a case where the film 34 is wound (forward rotation) is described.

The CPU 14 drives the film feeding motor 48 by outputting a command for causing the film feeding motor 48 to rotate in the forward direction and a pulse having a specific cycle to the driver 20 in accordance with the control program stored in the ROM 16. This causes the film feed assembly 49 and the film take-up assembly 50 to operate, thereby feeding the film 34 to a desired position. At this time, if the magnetic data 55 is recorded on the film 34 to be treated, the magnetic polarities of the magnetic data 55 shown in FIG. 7(A) are detected by the magnetic read head 90 passing over the film 34.

The signal amplifier 92 detects a change in the voltage, amplifies the voltage and outputs the voltage as shown in FIG. 7(B). Based on this voltage, the peak detector 94 outputs low-level signals at peaks in the negative direction while outputting high-level signals at peaks in the positive direction. Accordingly, a data pulse having a rectangular waveform as shown in FIG. 7(C) is obtained and is sent to the pulse inverter 96. Since the film feeding motor 48 is rotated in the forward direction in this case, the given data pulse is sent to the binary detector 98 as it is. The binary detector 98 sends the binary data as shown in FIG. 7(D) to the serial-parallel converter 100. In the serial-parallel converter 100, the bit shifting direction of the binary data is determined based on the output of the driver 20 before performing a serial-to-parallel conversion. In this case, a parallel data as shown in FIG. 7(E) is outputted from the serial-parallel converter 100 and stored in the RAM 18 via the CPU 14.

Next, a case where the film 34 is rewound (reverse direction) is described.

The CPU 14 drives the film feeding motor 48 by outputting a command for causing the film feeding motor 48 to rotate in the reverse direction and a pulse having a specific cycle to the driver 20 in accordance with the control program stored in the ROM 16. This causes the film feed assembly 49 and the film take-up assembly 50 to operate, thereby rewinding the film 34. At this time, if the magnetic data 55 recorded on the film 34 is read, the magnetic polarities of the magnetic data 55 shown in FIG. 8(A) are detected by the magnetic read head 90 passing over the film 34.

The signal amplifier 92 detects a change in the voltage, amplifies the voltage and outputs the voltage as shown in FIG. 8(B). Based on this voltage, a data pulse having a rectangular waveform as shown in FIG. 8(C1) is obtained in the peak detector 94 and given to the pulse inverter 96.

In the case of rewinding the film 34 (reverse rotation), the magnetic polarities of the magnetic data 55 are read in a direction reverse from the one when the film 34 is wound. Accordingly, as shown in FIGS. 7(A) and 8(A), the magnetic polarities at the time of rewinding the film 34 are reverse from those at the time of winding the film 34. Thus, the output voltage from the signal amplifier 92 and the data pulse from the peak detector 94 are as shown in FIGS. 8(B) and 8(C1), respectively. As described above, the polarities of the output voltage and the data pulse are inverted since the magnetic polarities are read in the reverse direction. Accordingly, in order to enable a binary conversion (binary transformation), the polarity of the data pulse from the peak detector 94 is inverted by the pulse inverter 96 before the binary conversion to generate a data pulse as shown in FIG. 8(C2).

The binary detector 98 applies a binary conversion to this data pulse to obtain a binary data shown in FIG. 8(D1), which is then sent to the serial-parallel converter 100. In this case, since the polarities are inverted once when the data pulse shown in FIG. 8(C2) is generated as described above, the binary data shown in FIG. 8(D1) is a data having polarities reverse from those of an original data which should be generated and, therefore, should be restored to the original data. Accordingly, the binary data shown in FIG. 8(D1) is inverted by the logic inverter 124 of the serial-parallel converter 100 to generate a binary data shown in FIG. 8(D2), which is then sent to the shift register 126. The binary data shown in FIG. 8(D2) is the same as the one obtained by rearranging the binary data (FIG. 7(D)), which was obtained at the time of winding the film 34 (forward rotation), from behind.

In the shift register 126, the bit shifting direction of the binary data from the binary detector 98 is determined based on the output of the driver 20 before performing a serial-parallel conversion. In this case, a parallel data as shown in FIG. 8(E) is outputted by reversing the bit shifting direction of the binary data and stored in the RAM 18 via the CPU 14.

In this way, the magnetic data 55 can be satisfactorily read by changing the reading operation depending upon whether the film 34 is wound or rewound.

The magnetic reading device 70a is described above. It should be appreciated that the magnetic reading device 70b is similarly constructed and operated.

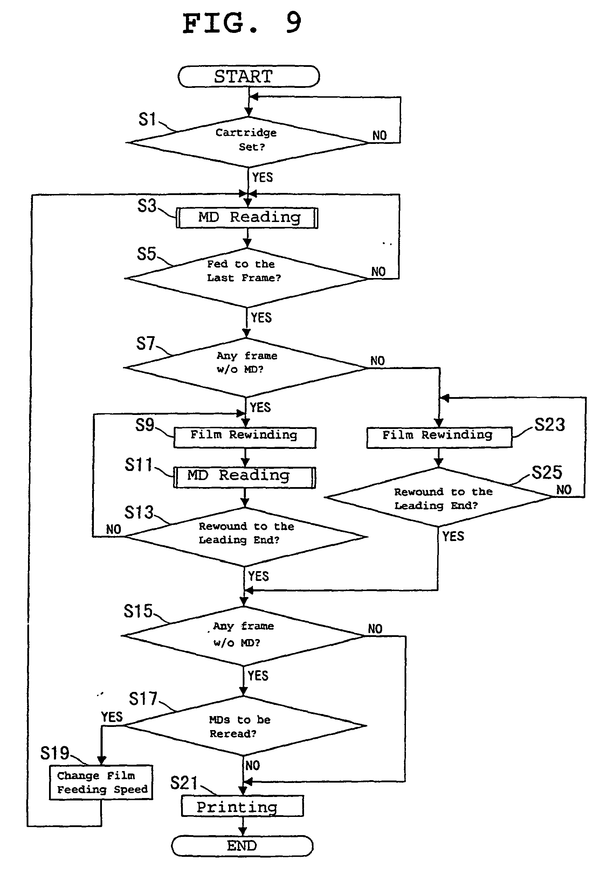

The magnetic data reading operation of the film feed apparatus 10 is described with reference to FIG. 9.

First, whether or not the cartridge 32 containing the film 34 is set is detected by the detection sensor 112 (Step S1). The apparatus 10 waits on standby unless the cartridge 32 is set, whereas the magnetic data reading operation as described later is performed (Step S3) if the cartridge 32 is set. Then, whether or not the film 34 has been wound to the last frame 51 is discriminated (Step S5). The magnetic data continue to be read until the film 34 is wound to the last frame 51. If the film is wound to the last frame 51, whether or not there is any frame 51 whose magnetic data 55 has not been read yet is discriminated by an operation to be described later.

If there is a frame 51 whose magnetic data 55 has not been read yet, the film 34 is rewound (Step S9). At this time, the film 34 is continuously fed. Then, the magnetic data reading operation is performed again (Step S11) and whether or not the film 34 has been rewound to its leading end is discriminated by the perforation sensor 60 (Step S13). This flow returns to Step S9 unless the film 34 has not been rewound yet to its leading end, and whether or not there is any frame 51 whose magnetic data 55 has not been read yet is discriminated (Step S15) if the film 34 is rewound to its leading end.

If there is still a frame 51 whose magnetic data 55 has not been read yet, whether or not the magnetic data 55 should be read again is judged (Step S17). At this time, a notification that there is a frame 51 whose magnetic data 55 has not been read yet is given to the operator by means of the display 118 or the like in order to question him whether or not the magnetic data 55 should be reread. If the operator gives a command to reread the magnetic data 55 by means of the keyboard 120, the feeding speed of the film 34 is changed as set by the operator or automatically (Step S19) and this flow returns to Step S3 to reread the magnetic data 55.

If the operator gives no such command as above in Step S17, the magnetic data reading operation ends after a printing operation is performed (Step S21).

Thus, the magnetic data 55 is reread as long as the operator continues to give a command to reread.

If, in Step S15, there is no frame 51 whose magnetic data 55 has not been read yet, Step S21 follows.

Further, if, in Step S7, there is no frame 51 whose magnetic data has not been read, the film 34 is rewound (Step S23). After the film 34 is rewound to its leading end (YES in Step S25), Step S15 follows. In this case, the magnetic data reading operation ends after the printing operation is performed without rereading the magnetic data 55.

It should be noted that the magnetic data 54 is also read during the magnetic data reading and rereading operations in FIG. 9.

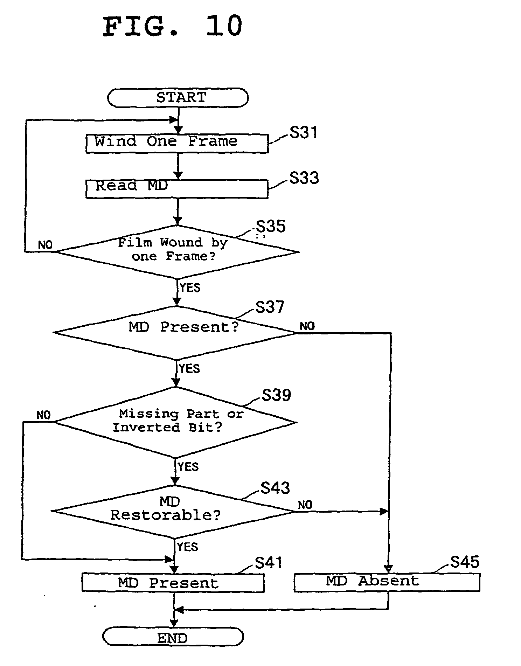

Next, the detail of the operation in Step S3 is described with reference to FIG. 10.

First, the film 34 is wound by one frame (Step S31), and the magnetic data 55 is read and stored in the RAM 18 (Step S33). Then, whether or not the film 34 has been wound by one frame is discriminated (Step S35), and this flow returns to Step S31 if not.

After the film 34 is wound by one frame, whether or not the magnetic data 55 is present in the RAM 18 is discriminated (Step S37). If the magnetic data 55 is present, whether or not the magnetic data 55 has missing part(s) or inverted bit(s) or inverted parity bit is discriminated (Step S39). If the magnetic data 55 has neither a missing part nor an inverted bit nor an inverted parity bit, the presence of the magnetic data is judged and a flag in the RAM 18 indicative thereof is set in the RAM 18 (Step S41) and this flow ends.

If the magnetic data 55 has missing part(s) or inverted bit(s) in Step S39, whether or not the magnetic data 55 is restorable is discriminated (Step S43). Since the magnetic data 55 is a 8-bit data comprised of a 1-bit party and a 7-bit data, whether or not the magnetic data 55 is restorable can be judged by, for example, judging whether or not an error is found in one or less bit using a known error detecting method.

If restorable, the magnetic data 55 is restored using a known error correcting method, and then Step S41 follows.

On the other hand, if the magnetic data 55 is absent in Step S37 or if the magnetic data 55 is judged not to be restorable in Step S43, the absence of the magnetic data is judged and the flag in the RAM 18 indicative thereof is set (Step S45) and this flow ends.

In this way, the magnetic data 55 is read frame by frame while the film 34 is intermittently wound frame by frame. Thereafter, the presence or absence of the magnetic data 55 is judged for each frame 51. Such an operation can deal with a case where the magnetic data 55 is mistakenly read.

The magnetic data reading operation at the time of the film rewinding in Step S11 is performed by the operations of Steps S33 to S45 excluding Step S31 of FIG. 10. At this time, this flow returns to Step S33 if the discrimination result in Step S35 is negative. In this way, when the film is rewound, the magnetic data 55 of the respective frames 51 of the film 35 being continuously fed are successively read and, then, the presence or absence of the magnetic data 55 is judged for each frame 51.

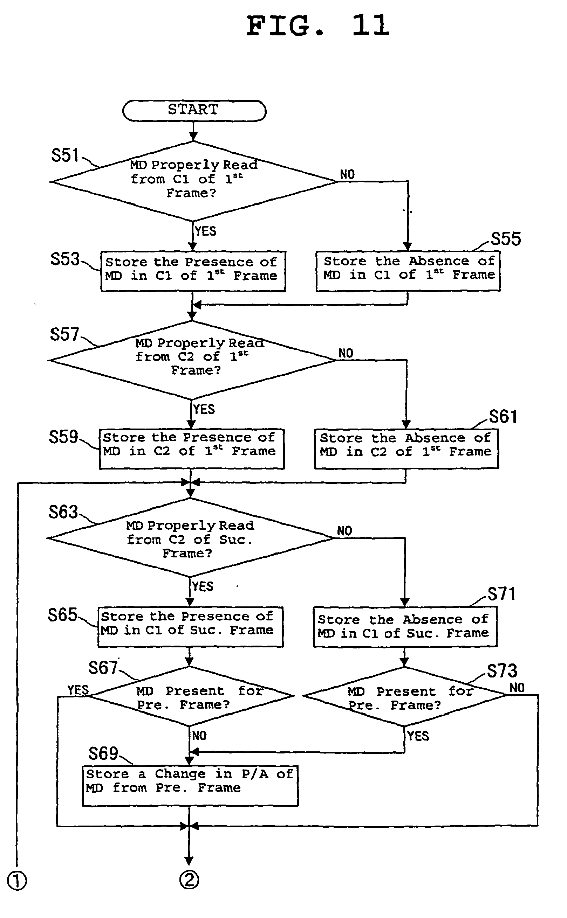

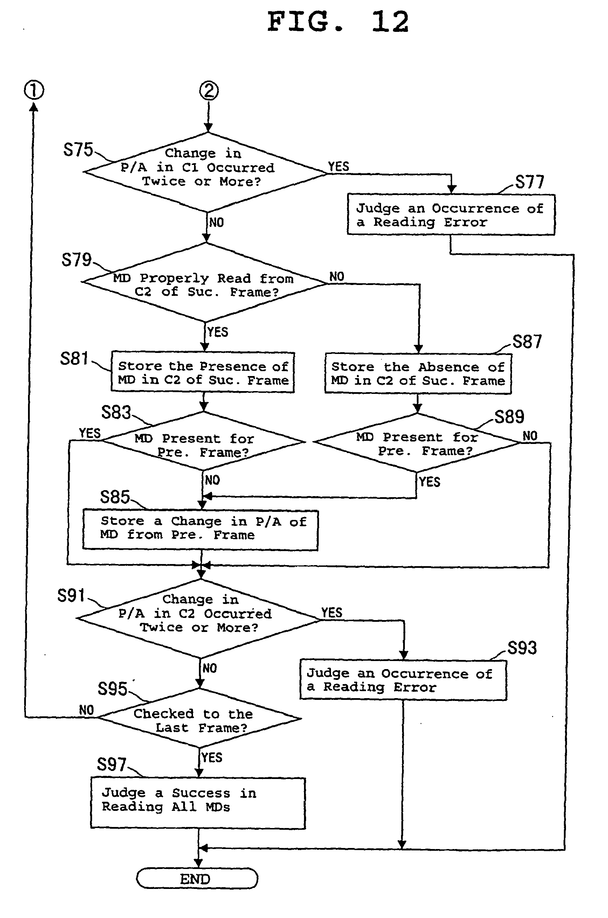

Further, the detail of the operations in Steps S7 and S15 is described with reference to FIGS. 11 and 12.

First, referring to the flag in the RAM 18 for each frame 51, whether or not the magnetic data 55 has been properly read from the track C1 of the first frame, i.e. the magnetic data 55 is present in the track C1 of the first frame (Step S51). The presence of the magnetic data 55 in the track C1 of the first frame is stored in the RAM 18 (Step S53) if the magnetic data 55 has been properly read, whereas the absence thereof is stored in the RAM 18 (Step S55) if the magnetic data 55 has not been properly read.

After Steps S53 and S55, whether or not the magnetic data 55 has been properly read from the track C2 of the first frame is discriminated (Step S57). The presence of the magnetic data 55 in the track C2 of the first frame is stored in the RAM 18 (Step S59) if the magnetic data 55 has been properly read, whereas the absence thereof is stored in the RAM 18 (Step S61) if the magnetic data 55 has not been properly read.

After Steps S59 and S61, whether or not the magnetic data 55 has been properly read from the track C1 of the succeeding frame is discriminated (Step S63). If the magnetic data 55 has been properly read, the presence of the magnetic data 55 in the track C1 of the succeeding frame is stored in the RAM 18 (Step S65) and whether or not the magnetic data 55 is present for the previous frame 51 is discriminated (Step S67). If the magnetic data 55 is absent in the previous frame 51, a change in the presence/absence of the magnetic data 55 from the previous frame 51 is stored in the RAM 18 (Step S69).

On the other hand, if the magnetic data 55 is discriminated not to have been properly read in Step S63, the absence of the magnetic data 55 in the track C1 of the succeeding frame 51 is stored in the RAM 18 (Step S71) and whether or not the magnetic data 55 is present for the previous frame 51 is discriminated (Step S73). Step S69 follows if the magnetic data 55 is present for the previous frame 51.

If YES in Step S67, if NO in Step S73, or after the operation in Step S69, whether or not the change in the presence/absence of the magnetic data 55 in the track C1 from the previous frame 51 has occurred twice or more is discriminated (Step S67) as shown in FIG. 12. If this change has occurred twice or more, it is judged that a reading error has occurred for the frame 51 having no magnetic data 55 (Step S77) and this subroutine ends.

Unless the change has occurred twice or more in Step S75, whether or not the magnetic data 55 has been properly read from the track C2 of the succeeding frame 51 is discriminated (Step S79). If the magnetic data has been properly read, the presence of the magnetic data 55 in the track C2 of the succeeding frame 51 is stored in the RAM 18 (Step S81) and whether or not the magnetic data 55 is present for the previous frame 51 is discriminated (Step S83). If the magnetic data 55 is absent in the previous frame 51, a change in the presence/absence of the magnetic data 55 from the previous frame 51 is stored in the RAM 18 (Step S85).

On the other hand, if the magnetic data 55 is discriminated not to have been properly read in Step S79, the absence of the magnetic data 55 in the track C2 of the succeeding frame 51 is stored in the RAM 18 (Step S87) and whether or not the magnetic data 55 is present for the previous frame 51 is discriminated (Step S89). Step S85 follows if the magnetic data 55 is present for the previous frame 51.

If YES in Step S83, if NO in Step S89, or after the operation in Step S85, whether or not the change in the presence/absence of the magnetic data 55 in the track C2 from the previous frame 51 has occurred twice or more is discriminated (Step S91). If this change has occurred twice or more, it is judged that a reading error has occurred for the frame 51 having no magnetic data 55 (Step S93) and this flow ends.

Unless the change has occurred twice or more in Step S91, whether or not the check has been made up to the last frame 51 (Step S95). If not, this flow returns to Step S63. If the check has been made up to the last frame 51, all the magnetic data 55 are judged to have been successfully read upon the assumption that no magnetic data 55 was recorded for the frame 51 having no magnetic data 55 (Step S97) and this flow ends.

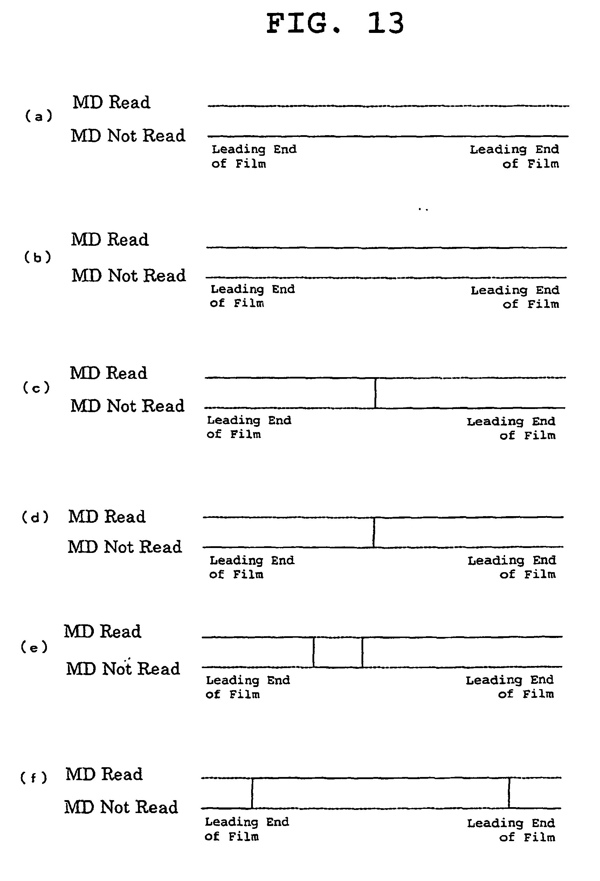

Accordingly, criteria for the judgment made by the operations shown in FIGS. 11 and 12 as to whether or not the magnetic data 55 have been read are as shown in FIG. 13.

The read states of the magnetic data 55 shown in FIGS. 13(a) to 13(d) are not judged as reading errors.

If the magnetic data 55 was read from none of the frames of the film 34 as shown in FIG. 13(a), it is judged that no magnetic data 55 is recorded on the film 34 and no reading error occurred. If the magnetic data 55 were read from all of the frames of the film 34 as shown in FIG. 13(b), it is judged that exposure was made from the first frame to the last frame of the film 34 and no reading error occurred. If the magnetic data 55 were read from the first frame to an intermediate frame of the film 34 as shown in FIG. 13(c), it is judged that exposure was made up to the intermediate frame of the film 34 and no reading error occurred. If the magnetic data 55 were read from an intermediate frame to the last frame of the film 34 as shown in FIG. 13(d), it is judged that exposure was made to the film 34 from the intermediate frame and no reading error occurred.

In this way, no reading error is judged to have occurred if the read state of the magnetic data 55 changes once or not at all between the first and last frames of the film 34.

On the other hand, the reading error is judged to have occurred if the read state of the magnetic data 55 changes twice or more between the first and last frames of the film 34 as shown in FIGS. 13(e) and 13(f).

This enables the judgment on the occurrence of the reading error in consideration of the cases where no magnetic data 55 is recorded on the film 34, exposure was made to the film 34 from the intermediate frame, and exposure was made to the film 34 up to the intermediate frame.

In this film feeding apparatus 10, if there is a frame 51 whose magnetic data 55 failed to be read while the film was wound during the scanning, the magnetic data 55 are automatically read also during the rewinding of the film after the scanning. In this way, a probability of reading the magnetic data 55 is improved by reading the magnetic data 55 also during the rewinding of the film after changing the reading state by reversing the feeding direction of the film 34. The need for rereading the magnetic data 55 by performing the scanning again becomes remarkably lower. Therefore, operability can be improved.

During the winding of the film 34, the magnetic data 55 are read by intermittently feeding the film 34 frame by frame. During the rewinding of the film 34, the magnetic data 55 are continuously read without stopping the film feeding motor 48. Since the magnetic data 55 can be read with the reading state changed. Thus, the reading rate of the magnetic data 55 can be improved.

Further, since the feeding speed of the film 34 is changed when the magnetic data 55 are reread, the magnetic data 55 recorded at a considerably high or low recording density can also be dealt with. As a result, the reliability of the apparatus is improved by eliminating the need for reading the magnetic data 55 again and again.

Further, the photographed images are less likely to be finished into prints different from a photographer's intention (e.g. different print size), thereby refraining troubles from occurring.

Although the magnetic data 55 are read also during the rewinding of the film 34 if there is a frame 51 whose magnetic data 55 was not read during the first winding of the film, the invention is not limited to this.

Specifically, if there is a frame 51 whose magnetic data 55 was not read during the first winding of the film, the film 34 is rewound without reading the magnetic data 55 and the magnetic data 55 of the film 34 may be read during the second winding of the film after the feeding speed of the film 34 is changed.

Here, a measurement result on the reading rate of the magnetic data 55 by one experiment is described.

This experiment was conducted by a method comprising the steps of (A) after reading the magnetic data 55 during the winding of the film for the scanning, (B) reading the magnetic data 55 during the rewinding of the film, (C) winding the film after changing the feeding speed to reread the magnetic data 55, and (D) rereading the magnetic data 55 during the rewinding of the film. The reading rates of the magnetic data 55 were measured after the completion of the respective operation steps.

A reading rate ① of the magnetic data after the completion of the operation step (A), a reading rate ② thereof after the completion of the operation step (B) and a reading rate ③ thereof after the completion of the operation step (D) are shown in TABLE-1.

As conditions of the experiment, the rotating speeds of the film feeding motor 48 were 3250 pps during the winding of the film (A), 3500 pps during the rewinding of the film (B) and (D) and 2650 pps during the winding of the film (C). 5 rolls of film were prepared and one measurement was conducted for each film. The same medium was used for all the measurements.

**TABLE-1**

| Film No. | Measured Reading Rate (%) | | |
|---|---|---|---|
| | ① | ② | ③ |
| 1 | 64.2 | 97.5 | 97.5 |
| 2 | 80.0 | 87.5 | 88.3 |
| 3 | 35.0 | 80.8 | 81.7 |
| 4 | 62.5 | 93.3 | 95.0 |
| 5 | 54.2 | 78.3 | 87.5 |

As can be seen from TABLE-1, as the operations progress from (A) to (D), the reading rate of the magnetic data is improved.

Next, a measurement result on the reading rate of the magnetic data 55 by another experiment is described.

This experiment was conducted by a method comprising the steps of (A) rewinding the film after reading the magnetic data 55 during the winding of the film for the scanning, and (B) winding the film after changing the feeding speed to thereby reread the magnetic data 55. A reading rate ① of the magnetic data after the completion of the operation step (A) and a reading rate ② thereof after the completion of the operation step (B) were measured. The measurement result is shown in TABLE-2.

As conditions of the experiment, the rotating speeds of the film feeding motor 48 were 3250 pps during the winding of the film (A), 2650 pps during the winding of the film (B) and 3500 pps during the rewinding of the film. 5 rolls of film were prepared and one measurement was conducted for each film. The same medium was used for all the measurements.

**TABLE-2**

| Film No. | Measured Reading Rate (%) | |
|---|---|---|
| | ① | ② |
| 1 | 97.5 | 99.2 |
| 2 | 96.7 | 98.3 |
| 3 | 97.5 | 99.2 |
| 4 | 97.5 | 98.3 |
| 5 | 90.8 | 95.0 |

As can be seen from TABLE-2, the reading rate is improved by rereading the magnetic data 55 after changing the feeding speed of the film.

In the case that the film feeding apparatus 10 is applied to an apparatus for scanning the image information of the film 34 without printing it, the printing controller 114 and the printing assembly 116 shown in FIG. 2 and Step S21 shown in FIG. 9 may be omitted.

According to the present invention, the operability and reliability of the apparatus can be improved since the reading rate of the magnetic data is improved.

### LIST OF REFERENCE NUMERALS

- 10 ...: Film Feeding Apparatus
- 12 ...: Film Feed Controller
- 14 ...: CPU
- 16 ...: ROM
- 18 ...: RAM
- 20 to 30 ...: Driver
- 32 ...: Cartridge
- 34 ...: Film
- 42, 44, 46 ...: Film Feeding Roller
- 48 ...: Film Feeding Motor
- 51 ...: Frame
- 54, 55 ...: Magnetic Data
- 64 ...: Magnetic Data Reading/Writing Unit
- 68a, 68b, 70a, 70b ...: Magnetic Reading Device
- 80, 90 ...: Magnetic Read Head,
- 82, 92 ...: Signal Amplifier
- 84, 94 ...: Peak Detector
- 86, 99 ...: Binary Detector
- 88, 100 ...: Serial-Parallel Converter,
- 96 ...: Pulse Inverter

- 118 ...: Display
- 120 ...: Keyboard
- 122 ...: Switching Circuit
- 124 ...: Logic Inverter
- 126 ...: Shift Register

## Claims

1. A film feeding apparatus (10) for feeding photographic film having magnetic data recorded on the film for each frame of the film comprising a reading means (64) for reading the magnetic data (55) while the film (34) is being fed, a storage means (18) for storing the magnetic data (55) read by the reading mans (64), a judging means for judging whether reading of the magnetic data has failed, and a reading controller which makes the reading means (64) read the magnetic data (55) again under a different reading condition when the judging means judges that reading of the magnetic data has failed, **characterized in that** the reading controller (14) is adapted to make the reading means (64) read the magnetic data (55) for each frame (51) while the film (34) is being fed from its first to its last frame, that the judging means is adapted to judge (S7) failure of reading of the magnetic data for any of the frames after the film (34) has been fed to its last frame (S5), that a film feed control is provided to transport reversely (S11) the film (34) when the judging means judges failure of reading of magnetic data for any of the frames, and that the reading controller makes the reading means (64) read the magnetic data (S11) while the film is being transported reversely with the film feed control changing the manner of feeding film when the film is fed from its first to last frame, and when the film is transported reversely.

2. A film feeding apparatus (10) according to claim 1, wherein the film fed control feeds the film intermittently, when the magnetic data is read with the film being fed from its first to last frame, and transports reversely the film continuously.

3. A film feeding apparatus (10) according to claim 1 or 2 wherein the judging means is adapted to judge failure of reading of magnetic data for any of the frames after the film has been transported reversely (S17), and reading controller is adapted to make the reading means (64) re-read the magnetic data while the film is being fed again from its first to last frame, with the speed of feeding the film is changed from the first feeding (S19).

4. A film feeding apparatus (10) according to claim 3 further comprising a notifying means (118) for notifying an operator that reading of magnetic data was failed for a frame even after the reversely transporting of the film (34), a command generator (120) operable by the operator to generate a re-reading command, and the reading controller and the film feed control are arranged to respond to the re-reading command to feed the film from its first to last frame and make the reading means re-read the magnetic data during the feeding of the film.

5. A film feeding apparatus (10) according to any of claim 1 to 4, wherein the judging means generates flags representative of presence and absence of magnetic data for each frame in the storage means, and the judging means includes a flag judging means for judging, based on the flags stored in the storage means (18), whether or not reading of the magnetic data has failed for any of the frames.

6. A film feeding apparatus (10) according to claim 5, wherein flag judging means (14) refers to the flags and judges the failure of magnetic data reading when a signal representing the presence and the absence of the magnetic data for each frame changes twice or more through the frames (Figs. 11-13).

7. A film feeding method for feeding a photographic film (34) while reading magnetic data (54, 55) recorded on the film (34), comprising
a first step of reading magnetic data (54, 55) frame by frame while the film (34) is being fed and storing the read data for each frame (51) in a storage means (18),
a second step of judging, based on the read data stored in the storage means (18), whether or not reading of the magnetic data was failed for any of the frames,
a third step of re-reading the magnetic data (54,55) and storing the re-read data in the storage means while the film (34) is being transported reversely, if it is judged that reading of the magnetic data was failed for any of the frames,
**characterized by** the steps of
judging after the reversely transporting of the film, whether or not reading of the magnetic data has failed for any of the frames,
notifying an operator of the failure of the magnetic data reading for any of the frames even after re-reading of the magnetic data with the reversely transporting of the film, and
receiving a command from the operator and re-reading the magnetic data (54,55), while feeding the film (34) at a speed different from that of the first feeding.

## Patentansprüche

1. Filmzufuhrvorrichtung (10) zum Zuführen eines photographischen Films, der magnetische Daten auf dem Film für jeden Rahmen des Films aufgezeichnet aufweist, umfassend Lesemittel (64) zum Lesen der magnetischen Daten (55), während der Film (34) zugeführt ist bzw. wird, Speichermittel (18) zum Speichern der magnetischen Daten (55), die durch die Lesemittel (64) gelesen sind, Beurteilungs- bzw. Bewertungsmittel zum Beurteilen bzw. Bewerten, ob ein Lesen der magnetischen Daten versagt hat, und eine Lesesteuer- bzw. -regeleinrichtung, welche die Lesemittel (64) die magnetischen Daten (55) neuerlich unter einer unterschiedlichen Lesebedingung lesen läßt, wenn die Bewertungsmittel abschätzen bzw. bewerten, daß ein Lesen der magnetischen Daten fehlerhaft war bzw. versagt hat,
**dadurch gekennzeichnet, daß**
die Lesesteuer- bzw. -regeleinrichtung (14) adaptiert ist, die Lesemittel (64) die magnetischen Daten (55) für jeden Rahmen (51) lesen zu lassen, während der Film (34) von seinem ersten bis zu seinem letzten Rahmen zugeführt ist bzw. wird, daß die Bewertungsmittel adaptiert sind, um ein Versagen eines Lesens der magnetischen Daten für jeden der Rahmen zu bewerten (S7), nachdem der Film (34) bis zu seinem letzten Rahmen (S5) zugeführt ist, daß eine Filmzufuhrsteuerung bzw. -regelung vorgesehen ist, um umgekehrt (S11) den Film (34) zu transportieren, wenn die Bewertungsmittel einen Fehler bzw. ein Versagen eines Lesens von magnetischen Daten für irgendeinen der Rahmen bewerten bzw. beurteilen, und daß die Lesesteuer- bzw. -regeleinrichtung die Lesemittel (64) die magnetischen Daten (S11) lesen läßt, während der Film umgekehrt bzw. in der Gegenrichtung transportiert ist, wobei die Filmzufuhrsteuerung bzw. -regelung die Art eines Zuführens eines Films ändert, wenn der Film von seinem ersten bis zu seinem letzten Rahmen zugeführt wird, und wenn der Film umgekehrt transportiert ist bzw. wird.

2. Filmzufuhrvorrichtung (10) nach Anspruch 1, wobei die Filmzufuhrsteuerung bzw. -regelung den Film intermittierend zuführt, wenn die magnetischen Daten gelesen sind bzw. werden, wobei der Film von seinem ersten zu seinem letzten Rahmen zugeführt wird, und den Film kontinuierlich umgekehrt transportiert.

3. Filmzufuhrvorrichtung (10) nach Anspruch 1 oder 2, wobei die Beurteilungsmittel adaptiert sind, um ein Versagen eines Lesens von magnetischen Daten für irgendeinen der Rahmen zu bewerten bzw. abzuschätzen, nachdem der Film umgekehrt (S17) transportiert ist, und die Lesesteuer- bzw. -regeleinrichtung adaptiert ist, um die Lesemittel (64) die magnetischen Daten neuerlich lesen zu lassen, während der Film neuerlich von seinem ersten bis zu seinem letzten Rahmen zugeführt ist, wobei die Geschwindigkeit eines Zuführens des Films von dem ersten Zuführen (S19) verändert ist.

4. Filmzufuhrvorrichtung (10) nach Anspruch 3, weiterhin umfassend Verständigungs- bzw. Meldungsmittel (118) zum Verständigen eines Betätigers bzw. Betreibers, daß ein Lesen von magnetischen Daten für einen Rahmen selbst nach dem umgekehrten Transportieren des Films (34) versagt hat bzw. fehlerhaft war, einen Befehlsgenerator bzw. eine Befehlsbildungseinheit (120), der (die) durch den Betreiber bzw. Betätiger betätigbar ist, um einen Neu- bzw. Wiederhol-Lesebefehl zu generieren, und die Lesesteuer- bzw. -regeleinrichtung und die Filmzufuhrsteuerung bzw. -regelung angeordnet sind, um auf den Neu- bzw. Wiederhol-Lesebefehl zu antworten, um den Film von seinem ersten zu seinem letzten Rahmen zuzuführen und die Lesemittel die magnetischen Daten während des Zuführens des Films neuerlich bzw. wiederholt lesen zu lassen.

5. Filmzufuhrvorrichtung (10) nach einem der Ansprüche 1 bis 4, wobei die Bewertungsmittel Flags generieren, die für eine Anwesenheit und Abwesenheit von magnetischen Daten für jeden Rahmen in den Speichermitteln repräsentativ sind, und die Bewertungsmittel ein Flag-Beurteilungsmittel bzw. -Bewertungsmittel beinhalten zum Bewerten basierend auf den in den Speichermitteln (18) gespeicherten Flags, ob das Lesen der magnetischen Daten für irgendeinen der Rahmen fehlerhaft war oder nicht.

6. Filmzufuhrvorrichtung (10) nach Anspruch 5, wobei sich die Flag-Bewertungsmittel (14) auf die Flags beziehen und das Versagen eines Lesens der magnetischen Daten bewerten, wenn ein Signal, das die Anwesenheit und die Abwesenheit der magnetischen Daten für jeden Rahmen repräsentiert, sich zweimal oder öfter über die Rahmen verändert (Fig. 11-13).

7. Filmzufuhrverfahren zum Zuführen eines photographischen Films (34), während magnetische Daten (54, 55) gelesen werden, die auf dem Film (34) aufgezeichnet sind, umfassend
einen ersten Schritt eines Lesens von magnetischen Daten (54, 55) Rahmen für Rahmen, während der Film (34) zugeführt wird, und eines Speicherns der gelesenen Daten für jeden Rahmen (51) in Speichermitteln (18),
einen zweiten Schritt eines Bewertens bzw. Beurteilens basierend auf den gelesenen Daten, die in den Speichermitteln (18) gespeichert sind, ob die ein Lesen der magnetischen Daten für irgendeinen der Rahmen fehlerhaft war bzw. versagt hat oder nicht,
einen dritten Schritt eines neuerlichen bzw. wiederholten Lesens der magnetischen Daten (54, 55) und eines Speicherns der neuerlich bzw. wiederholt gelesenen Daten in den Speichermitteln, während der Film (34) umgekehrt bzw. in der Gegenrichtung transportiert wird, wenn bewertet wird, daß ein Lesen der magnetischen Daten für irgendeinen Rahmen versagt hat,
**gekennzeichnet durch** die Schritte
eines Bewertens nach dem umgekehrten Transportieren des Films, ob ein Lesen der magnetischen Daten für irgendeinen der Rahmen versagt hat oder nicht,
eines Verständigens eines Betreibers bzw. Betätigers des Fehlers des Lesens von magnetischen Daten für irgendeinen der Rahmen selbst nach einem neuerlichen bzw. wiederholten Lesen der magnetischen Daten mit dem umgekehrten Transportieren des Films, und eines Empfangens eines Befehls von dem Betätiger und eines neuerlichen bzw. wiederholten Lesens der magnetischen Daten (54, 55), während der Film (34) bei einer Geschwindigkeit unterschiedlich derjenigen des ersten Zuführens zugeführt wird.

## Revendications

1. Dispositif d'alimentation de film (10) pour alimenter un film photographique ayant des données magnétiques enregistrées sur le film pour chaque cadre du film, comportant des moyens de lecture (64) pour lire les données magnétiques (55) tandis que le film (34) est alimenté, des moyens de mémorisation (18) pour mémoriser les données magnétiques (55) lues par les moyens de lecture (64), des moyens d'estimation pour estimer si la lecture des données magnétiques a été défaillante, et une commande de lecture qui fait en sorte que les moyens de lecture (64) lisent les données magnétiques (55) à nouveau sous une condition de lecture différente lorsque les moyens d'estimation estiment que la lecture des données magnétiques a été défaillante, **caractérisé en ce que** la commande de lecture (14) est adaptée pour faire en sorte que les moyens de lecture (64) lisent les données magnétiques (55) pour chaque cadre (51) tandis que le film (34) est alimenté, de son premier à son dernier cadre, **en ce que** les moyens d'estimation sont adaptés pour estimer (S7) une défaillance de lecture des données magnétiques pour l'un quelconque des cadres après que le film (34) ait été alimenté jusqu'à son dernier cadre (35), **en ce qu'**une commande d'alimentation de film est fournie pour transporter le film (34) en sens inverse (S11) lorsque les moyens d'estimation estiment une défaillance de lecture des données magnétiques pour un quelconque des cadres, et **en ce que** la commande de lecture fait en sorte que les moyens de lecture (64) lisent les données magnétiques (S11) tandis que le film est transporté en sens inverse, la commande d'alimentation de film changeant la manière d'alimenter le film lorsque le film est alimenté de son premier vers son dernier cadre, et lorsque le film est transporté en sens inverse.

2. Dispositif d'alimentation de film (10) selon la revendication 1, dans lequel la commande d'alimentation de film alimente le film de manière intermittente, lorsque les données magnétiques sont lues tandis qu'en ayant le film alimenté de son premier vers son dernier cadre, et transporte le film en sens inverse de manière continue.

3. Dispositif d'alimentation de film (10) selon la revendication 1 ou 2, dans lequel les moyens d'estimation sont adaptés pour estimer une défaillance de lecture de données magnétiques pour un quelconque des cadres après que le film ait été transporté en sens inverse (S17), et la commande de lecture est adaptée pour faire en sorte que les moyens de lecture (64) lisent à nouveau les données magnétiques tandis que le film est alimenté à nouveau de son premier vers son dernier cadre, la vitesse d'alimentation du film étant modifiée par rapport à la première alimentation (S19).

4. Dispositif d'alimentation de film (10) selon la revendication 3, comportant en outre des moyens de notification (118) pour notifier à un opérateur qu'une lecture des données magnétiques a été défaillante pour un cadre même après le transport en sens inverse du film (34), un générateur d'instruction (120) pouvant être actionné par l'opérateur pour générer une instruction de relecture, et la commande de lecture et la commande d'alimentation de film sont prévues pour répondre à l'instruction de relecture pour alimenter le film de son premier vers son dernier cadre, et pour faire en sorte que les moyens de lecture lisent à nouveau les données magnétiques pendant l'alimentation du film.

5. Dispositif d'alimentation de film (10) selon l'une quelconque des revendications 1 à 4, dans lequel les moyens d'estimation génèrent des drapeaux représentatifs de la présence et de l'absence de données magnétiques pour chaque cadre dans les moyens de mémorisation, et les moyens d'estimation comportent des moyens d'estimation de drapeaux pour estimer, sur la base des drapeaux mémorisés dans les moyens de mémorisation (18), si oui ou non une lecture des données magnétiques a été défaillante pour l'un quelconque des cadres.

6. Dispositif d'alimentation de film (10) selon la revendication 5, dans lequel les moyens d'estimation de drapeaux (14) se réfèrent aux drapeaux, et estiment la défaillance de la lecture de données magnétiques lorsqu'un signal représentant la présente et l'absence de données magnétiques pour chaque cadre change deux fois ou plus à travers les cadres (figures 11 à 13).

7. Procédé d'alimentation de film pour alimenter un film photographique (34) tout en lisant des données magnétiques (54, 55) enregistrées sur le film (34), comportant
une première étape consistant à lire des données magnétiques (54, 55) cadre par cadre tandis que le film (34) est alimenté, et à mémoriser les données lues pour chaque cadre (51) dans des moyens de mémorisation (18),
une deuxième étape consistant à estimer, sur la base des données lues mémorisées dans les moyens de mémorisation (18), si oui ou non une lecture des données magnétiques a été défaillante pour l'un quelconque des cadres,
une troisième étape consistant à lire à nouveau les données magnétiques (54, 55), et à mémoriser les données relues dans les moyens de mémorisation tandis que le film (34) est transporté en sens inverse, s'il est estimé qu'une lecture des données magnétiques a été défaillante pour l'un quelconque des cadres,
**caractérisé par** les étapes consistant à
estimer, après le transport en sens inverse du film, si oui ou non une lecture des données magnétiques a été défaillante pour l'un quelconque des cadres,
notifier à un opérateur la défaillance de la lecture de données magnétiques pour l'un quelconque des cadres même après une relecture des données magnétiques avec le transport du film en sens inverse, et
recevoir une instruction de l'opérateur, et lire à nouveau les données magnétiques (54, 55) tout en alimentant le film (34) à une vitesse différente de celle de la première alimentation.
